(19) **Europäisches Patentamt**

**European Patent Office**

**Office européen des brevets**

(11) **EP 0 510 458 B1**

(12) **EUROPÄISCHE PATENTSCHRIFT**

(45) Veröffentlichungstag und Bekanntmachung des Hinweises auf die Patenterteilung:
**23.10.1996 Patentblatt 1996/43**

(51) Int. Cl.⁶: **A01N 43/647**, A01N 43/48, A01N 47/12, B27K 3/50

(21) Anmeldenummer: **92106221.2**

(22) Anmeldetag: **10.04.1992**

(54) **Mikrobizide Wirkstoffkombinationen**

Microbicidal compositions

Compositions des agents microbicides

(84) Benannte Vertragsstaaten:
**AT BE CH DE DK ES FR GB GR IT LI LU NL PT SE**

(30) Priorität: **23.04.1991 DE 4113158**

(43) Veröffentlichungstag der Anmeldung:
**28.10.1992 Patentblatt 1992/44**

(73) Patentinhaber: **BAYER AG**
**51368 Leverkusen (DE)**

(72) Erfinder:
• **Ludwig, Georg-Wilhelm, Dr.**
**W-4150 Krefeld 1 (DE)**
• **Exner, Otto, Dr.**
**W-4030 Ratingen (DE)**
• **Paulus, Wilfried, Dr.**
**W-4150 Krefeld 1 (DE)**
• **Büchel, Karl Heinz, Prof. Dr.**
**W-5093 Burscheid (DE)**
• **Holmwood, Graham, Dr.**
**W-5600 Wuppertal 11 (DE)**

(56) Entgegenhaltungen:
**DE-A- 3 414 244**

• **PATENT ABSTRACTS OF JAPAN, unexamined applications, Sektion C, Band 16, Nr. 40, 31. January 1992. THE PATENT OFFICE JAPANESE GOVERNMENT Seite 15 C 906**
• **PATENT ABSTRACTS OF JAPAN, unexamined applications, Sektion C, Band 12, Nr. 110, 08. April 1988. THE PATENT OFFICE JAPANESE GOVERNMENT Seite 146 C 486**
• **PATENT ABSTRACTS OF JAPAN, unexamined applications, Sektion C, Band 13, Nr.134, 4 April 1989. THE PATENT OFFICE JAPANESE GOVERNMENT Seite 50 C581**

**Beschreibung**

Die vorliegende Erfindung betrifft neue mikrobizide, synergistische Wirkstoffkombinationen aus bekannten Azolfungiziden und bekannten Iodpropargyl-Derivaten.

Es ist bekannt, daß Imidazol- oder Triazolfungizide, wie z.B. das $\alpha$-[2-(4-Chlorphenyl)-ethyl]-$\alpha$-(1,1-dimethylethyl)-1-H-1,2,4-triazol-1-ethanol (Tebuconazol) und das 1-[[2-(2,4-Dichlorphenyl)-4-n-propyl-1,3-dioxolan-2-yl]-methyl]-1-H-1,2,4,-triazol(Propiconazol) als solche oder in Form ihrer Salze zum Schutz von Pflanzen und Saatgut verwendet werden können (vgl. z.B. EP-A-0 040 345, EP-A-0 052 424). Weiterhin ist bekannt, daß diese Verbindungen auch für den Einsatz im Holzschutz zur Bekämpfung holzzerstörender oder holzverfärbender Mikroben geeignet sind (vgl. z.B. DE-OS 3.621.494 und US 4.079.062). Die Azolfungizide wie das genannte Tebuconazol haben ihre Wirkstärken gegen Basidiomyceten (Holzzerstörer) aber Schwächen gegen Ascomyceten (Holzverfärber, Bläuepilze.)

Weiterhin ist bekannt, daß Iodpropargyl-Derivate, wie z.B. das 3-Iod-2-propinyl-n-butylcarbamat (IPBC), für den Einsatz im Holzschutz geeignet sind (vgl. DE-OS 2.433.410). Diese Verbindungen sind sehr wirksam gegen Bläuepilze. Sie sind jedoch in der Einzelanwendung gegen Mikroorganismen unbefriedigend, da ihr Wirkungsspektrum lückenhaft ist.

Weiterhin ist bekannt, daß Mischungen aus IPBC und Didecyldimethylammoniumchlorid zum Schutz gegen holzstörende, vor allem Braunfäule- und Weißfäulepilze, und holzverfärbende Pilze und gegen Termiten einsetzbar sind (vgl. AU 8656-411). Auch Schimmelpilze und Mehltau können damit bekämpft werden.

Außerdem ist bekannt, daß IPBC in Kombination mit einem Azol-Derivate, wie z.B. 1-[2-(2,4-Dichlorphenyl)-1,3-dioxolan-2-yl-methyl]-1H-1,2,4-triazol [Azaconazol] als Fungizidwirkstoff in Holzschutzanstrichmittel eingearbeitet werden kann (vgl. DE-OS 3.414.244).

Die bekannten Azolfungizide und die bekannten Mischungen weisen Wirkungslücken auf. Sie sind daher ungeeignet für den Schutz technischer Materialien gegen Mikroorganismenbefall, da technische Materialien stets dem Angriff einer großen Anzahl verschiedener Mikroorganismen ausgesetzt sind, so daß ein zuverlässiger Schutz nur durch die Anwendung von Mikrobiziden mit breitem Wirkungsspektrum zu erzielen ist oder mit Mikrobizidkombinationen, die so zusammengesetzt sind, daß ein breites Wirkungsspektrum zustande kommt.

Es wurde nun gefunden, daß neue Wirkstoffkombinationen aus mindestens einem Azolfungizid, wie z.B.

- 1-(4-Chlorphenoxy)-3,3-dimethyl-1-(1H-1,2,4 triazo-1-yl)-2-butanon (Triadimefon)
- $\beta$-(4-Chlorphenoxy)-$\alpha$-(1,1-dimethyl-ethyl)-1H-1,2,4 triazol-1-ethanol (Triadimenol)
- $\pm$ $\alpha$-[2-(4-Chlorphenyl)-ethyl]-$\alpha$-(1,1-dimethylethyl)-1H-1,2,4-triazol-1-ethanol (Tebuconazol)
- (RS)-2-(2,4-Dichlorphenyl)-1-(1H-1,2,4 triazol-1-yl)-hexan-2-ol (Hexaconazol)
- 1-(N-propyl-N-(2-(2,4,6-trichlorphenoxy)ethyl- carbamoyl)-imidazol (Prochloraz),

deren Metallsalze oder Säureadditionsverbindungen und in den Fällen, wo die Verbindung ein asymmetrisches Kohlenstoffatom hat, auch die Isomeren und Isomerengemische der verschiedensten Zusammensetzungen, ganz besonders bevorzugt das $\pm$ $\alpha$-[2-(4-Chlorphenyl)-ethyl]-$\alpha$-(1,1-dimethylethyl)-1H-1,2,4-triazol-1-ethanol (Tebuconazol) und mindestens einem Iodpropargyl-Derivate der Formel (I)

$$IC{\equiv}C\text{-}CH_2\text{-}O\text{-}CO\text{-}NH\text{-}R \qquad\qquad (I)$$

in welcher

R     für geradkettiges oder verzweigtes Alkyl mit 1 bis 6 Kohlenstoffatomen, für Cycloalkyl mit 3 bis 6 Kohlenstoffatomen oder für Aryl, bevorzugt Phenyl steht,

eine besonders hohe mikrobizide Wirksamkeit aufweisen.

Als Beispiele seien z.B. genannt:
3-Iod-2-propinyl-n-butylcarbamat (IPBC),
3-Iod-2-propinyl-n-hexylcarbamat,
3-Iod-2-propinyl-cyclohexylcarbamat und
3-Iod-2-propinyl-phenylcarbamat,
ganz besonders bevorzugt ist das
3-Iod-2-propinyl-n-butylcarbamat (IPBC).

Überraschenderweise ist die mikrobizide, insbesondere die fungizide Wirksamkeit der erfindungsgemäßen Wirkstoffkombinationen wesentlich höher als die Summe der Wirkungen der einzelnen Wirkstoffe. Es liegt also ein echter synergistischer Effekt vor. Die Wirkstoffkombinationen stellen eine wertvolle Bereicherung der Technik dar.

Ganz besonders hervorzuheben ist die Kombination aus Tebuconazol und IPBC.

Die Azolfungizide können nicht nur in Form von freien Basen sondern - wie schon erwähnt - in Form ihrer Metallsalz-Komplexe oder als Säureadditions-Salze vorliegen. Als Metallsalz kommen vorzugsweise Salze von Metallen der II. bis IV. Hauptgruppe und der I. und II. sowie IV. bis VII. Nebengruppe des Periodensystems in Frage, wobei Kupfer, Zink, Mangan, Magnesium, Zinn, Eisen, Calcium, Aluminium, Blei, Chrom, Kobalt und Nickel, beispielhaft genannt seien.

Als Anionen der Salze kommen solche in Betracht, die sich vorzugsweise von folgenden Säuren ableiten: Halogenwasserstoffsäuren, wie z.B. Chlorwasserstoffsäure und Bromwasserstoffsäure, ferner Phosphorsäure, Salpetersäure und Schwefelsäure.

Die Metallsalz-Komplexe der Azolfungizide können in einfacher Weise nach üblichen Verfahren erhalten werden, so z.B. durch Lösen des Metallsalzes in Alkohol, z.B. Ethanol und Hinzufügen zum Azolfungizid. Man kann Metallsalz-Komplexe in bekannter Weise, z.B. durch Abfiltrieren isolieren und gegebenenfalls durch Umkristallisieren reinigen.

Zur Herstellung von Säureadditionssalzen der Azolfungizide kommen vorzugsweise folgende Säuren in Frage: Die Halogenwasserstoffsäuren, wie z.B. Chlorwasserstoffsäure und Bromwasserstoffsäure, insbesondere Chlorwasserstoffsäure, ferner Phosphorsäure, Salpetersäure, Schwefelsäure, mono- und bifunktionelle Carbonsäuren und Hydroxycarbonsäuren, wie z.B. Essigsäure, Propionsäure, Buttersäure, Mandelsäure, Oxalsäure, Bernsteinsäure, 2-Hydroxy-ethan-dicarbonsäure, Maleinsäure, Fumarsäure, Weinsäure, Citronensäure, Salicylsäure, Sorbinsäure, Milchsäure sowie Sulfonsäuren, wie z.B. p-Toluolsulfonsäure, 1,5-Naphthalindisulfonsäure, Alkansulfonsäuren und gegebenenfalls substituierte Benzoesäuren.

Die Säureadditions-Salze der Verbindungen können in einfacher Weise nach üblichen Salzbildungsmethoden, z.B. durch Lösung einer Verbindung in einem geeigneten inerten Lösungsmittel und Hinzufügen der Säure, z.B. Chlorwasserstoffsäure, erhalten werden und in bekannter Weise, z.B. durch Abfiltrieren, isoliert und gegebenenfalls durch Waschen mit einem inerten organischen Lösungsmittel gereinigt werden.

Es ist auch möglich, Gemische verschiedener Azol-Derivate einzusetzen. Diese Verbindungen und ihre Herstellung sind bekannt, so kann man 1-Hydroxyethyl-azol-Derivate, z.B. aus einem geeigneten Oxiran und einem geeigneten Azol, wie z.B. 1,2,4-Triazol oder Imidazol, erhalten (vgl. EP-A-0 040 345, EP-A-0 052 424, DE-OS 2.551.560).

Es ist auch möglich, Iodpropargyl-Derivat-Gemische einzusetzen, auch die Wirkstoffe der Formel (I) sind bekannt und nach bekannten Verfahren herstellbar, so z.B. in dem man geeignete acetylenische Alkohole iodiert und anschließend durch Umsetzung des Reaktionsproduktes mit einem geeigneten Isocyanat das entsprechende Carbamat herstellt (vgl. DE-OS 2.433.410).

Die Gewichtsverhältnisse der Wirkstoffe in den Wirkstoffkombinationen können in relativ großen Bereichen schwanken.

Die Mischungen enthalten die Azolkomponente von 0,1 bis 99,9 %, der Rest zu 100 % ist die Iodpropargylverbindung.

Das Mischungsverhältnis Azolkomponente zu Iodpropargylverbindung ist vorzugsweise 1:9 bis 9:1, besonders bevorzugt 2,5:7,5 bis 7,5:2,5.

Die erfindungsgemäßen Wirkstoffkombinationen weisen eine starke Wirkung auf Mikroorganismen auf; sie sind vor allem wirksam gegen Schimmelpilze, holzverfärbende und holzzerstörende Pilze, Beispielhaft - ohne jedoch zu limitieren - seien die folgenden Gruppen von Mikroorganismen genannt:

A:      Holzverfärbende Pilze:
A1:      Ascomyceten:
         Ceratocystis wie Ceratocystis minor
A2:      Deuteromyceten:
         Aspergillus wie Aspergillus niger
         Aureobasidium wie Aureobasidium pullulans
         Dactyleum wie Dactyleum fusarioides
         Penicillium wie Penicillium brevicaule oder
         Penicillium variabile
         Sclerophoma wie Sclerophoma pithyophila
         Scopularia wie Scopularia phycomyces
         Trichoderma wie Trichoderma viride oder
         Trichoderma lignorum
A3:      Zygomyceten:
         Mucor wie Mucor spinorus
B:      Holzzerstörende Pilze:
B1:      Ascomyceten:
         Chaetomium wie Chaetomium globosum oder
         Chaetomium alba-arenulum
         Humicola wie Humicola grisea

Petriella wie Petriella setifera

Trichurus wie Trichurus spiralis

B2: Basidiomyceten

Coniophora wie Coniophora puteana

Coriolus wie Coriolus versicolor

Donkioporia wie Donkioporia expansa

Glenospora wie Glenospora graphii

Gloeophyllum wie Gloeophyllum abietinum oder

Gloeophyllum adoratum oder Gl. protactum oder

Gloeophyllum sepiarium oder Gl. trabeum

Lentinus wie Lentinus cyathiformes oder

Lentinus edodes oder Lentinus lepideus oder

Lentinus grinus oder L. squarrolosus

Paxillus wie Paxillus panuoides

Pleurotus wie Pleurotis ostreatus

Poria wie Poria monticola oder Poria placenta

oder Poria vaillantii oder Poria vaporaria

Serpula wie Serpula himantoides oder Serpula

lacrymans

Stereum wie Stereum hirsutum

Tyromyces wie Tyromyces palustris

B3: Deuteromyceten

Alternaria wie Alternaria tenius

Cladosporium wie Cladosporium herbarum

Die erfindungsgemäßen Wirkstoffkombinationen, Mittel, Konzentrate bzw. allgemein Formulierungen und entsprechende Anwendungsformen weisen starke mikrobizide Wirkungen auf. Sie können deshalb zum Schutz von Holz und Holzwerkstoffen gegen Mikroorganismen, z.B. gegen holzzerstörende oder holzverfärbende Pilze, eingesetzt werden.

Unter Holz, welches durch die erfindungsgemäßen Mischungen geschützt werden kann, ist beispielhaft zu verstehen: Bauholz, Holzbalken, Eisenbahnschwellen, Telefonmasten, Holzzäune, Holzverkleidungen, Holzfenster und -türen, Sperrholz, Spanplatten, Tischlerarbeiten oder Holzprodukte die ganz allgemein beim Hausbau oder in der Bautischlerei Verwendung finden.

Die neuen Wirkstoffkombinationen können als solche, in Form von Konzentraten oder allgemein üblichen Formulierungen sowie den daraus bereiteten Anwendungsformen wie Lösungen, Suspensionen, Emulsionen oder Pasten angewendet werden.

Ein besonders effektiver Holzschutz wird durch großtechnische Imprägnierverfahren, z.B. Vakuum, Doppelvakuum - oder Druckverfahren erzielt.

Die Menge der eingesetzten Wirkstoffkombinationen ist von der Art und dem Vorkommen der Mikroorganisem, der Keimzahl und von dem Medium abhängig. Die optimale Einsatzmenge kann bei der Anwendung jeweils durch Testreihen ermittelt werden. Im allgemeinen ist es jedoch ausreichend 0,001 bis 5 Gew.-%, vorzugsweise 0,05 bis 1 % der Wirkstoffgemische, bezogen auf das zu schützende Material, einzusetzen. Die genannten Formulierungen können in an sich bekannter Weise hergestellt werden, z.B. durch Vermischen der Wirkstoffe mit einem Lösungs- bzw. Verdünnungsmittel und/oder Binde- oder Fixiermittels, gegebenenfalls Sikkative und UV-Stabilisatoren und gegebenenfalls Farbstoffen und Pigmenten sowie weiteren Verarbeitungshilfsmitteln.

Als Lösungs- bzw. Verdünnungsmittel kommen organischchemische Lösungsmittel oder Lösungsmittelgemische und/oder ein polares organisches Lösungsmittel oder Lösungsmittelgemische und/oder ein öliges bzw. ölartiges organisch-chemisches Lösungsmittel oder Lösungsmittelgemisch und/oder Wasser mit mindestens einem Emulgator und/oder Netzmittel in Frage. Als übliche schwerflüchtige, wasserunlösliche ölige oder ölartige Lösungsmittel werden vorzugsweise die jeweiligen Mineralöle/mineralölhaltige Lösungsmittelgemische oder deren Aromatenfraktionen verwendet. Beispielhaft seien Testbenzin, Petroleum oder Alkylbenzole genannt, daneben Spindelöl und Monochlornaphthalin. Die Siedebereiche dieser schwerflüchtigen Lösemittel(gemische) überstreichen den Bereich von ca. 170°C bis maximal 350°C.

Die vorbeschriebenen schwerflüchtigen öligen oder ölartigen Lösungsmittel können teilweise durch leichter flüchtige organisch-chemische Lösungsmittel ersetzt werden.

Vorzugsweise wird zur Herstellung eines erfindungsgemäßen Holzschutzmittels ein Teil des oben beschriebenen Lösungsmittels oder Lösungsmittelgemisches durch ein polares organisch-chemisches Lösungsmittel oder Lösungsmittelgemisch ersetzt. Vorzugsweise gelangen dabei Lösungsmittel, die Hydroxygruppen, Estergruppen, Ethergruppen oder Gemische dieser Funktionalität enthalten, zum Einsatz. Beispielhaft seien Ester oder Glykolether genannt. Als Bindemittel werden erfindungsgemäß verstanden wasserverdünnbare bzw. in organisch-chemischen Lösungsmitteln löslich, dispergier- oder emulgierbare Kunstharze, bindende trocknende Öle, z.B. auf Basis von Acrylharzen, Vinylharzen, Polyesterharzen, Polyurethanharzen, Alkydharzen, Phenolharzen, Kohlenwasserstoffharzen, Siliconharzen. Das benutzte Bindemittel kann als Lösung, Emulsion oder Dispersion eingesetzt werden. Vorzugsweise werden Gemische aus Alkydharze und trocknendem pflanzenlichen Öl verwendet, Besonders bevorzugt sind Alkydharze mit einem Ölanteil zwischen 45 und 70 %.

Das erwähnte Bindemittel kann ganz oder teilweise durch ein Fixierungsmittel(gemisch) oder ein Weichmacher (gemisch) ersetzt werden. Diese Zusätze sollen einer Verflüchtigung der Wirkstoffe sowie einer Kristallisation bzw. Ausfällens vorbeugen. Vorzugsweise ersetzen sie 0,01 bis 30 % des Bindemittels (bezogen auf 100 % des eingesetzten Bindemittels).

Die Weichmacher stammen aus den chemischen Klassen der Phthalsäureester wie Dibutyl-, Dioctyl- oder Benzylbutylphthalat, Phosphorsäureester wie Tributylphosphat, Adipinsäureester wie Di-(2-ethylhexyl)-adipat, Stearate wie Butylstearat und Amylstearat, Oleate wie Butyloleat, Glycerinether oder höhermolekulare Glykolether, Glycerinester sowie p-Toluolsulfonsäureester.

Fixierungsmittel basieren chemisch auf Polyvinylalkylethern wie z.B. Polyvinylmethylether oder Ketonen wie Benzophenon, Ethylbenzophenon.

Die erfindungsgemäßen Wirkstoffkombinationen, die daraus herstellbaren Mitteln, Konzentraten oder ganz allgemein Formulierungen können auch mit weiteren Mikrobiziden Fungizide, Insektizide und/oder andere Wirkstoffe zur Vergrößerung des Wirkungsspektrums oder Erzielung besonderer Effekte gemischt werden. Diese Mischungen können ein noch breiteres Wirkungsspektrums besitzen als die erfindungsgemäßen Kombinationen. In vielen Fällen erhält man dabei synergistische Effekte, das heißt, die Wirksamkeit der Mischung ist größer als die der Wirksamkeit der Einzelkomponenten. Besonders günstige Mischungspartner sind z.B. die folgenden Verbindungen:

Sulfenamide wie Dichlofluanid (Euparen), Tolylfluanid (Methyleuparen), Folpet, Fluorfolpet;

Benzimidazole wie Carbendazim (MBC), Benomyl, Fuberidazole, Thiabendazole oder deren Salze;

Thiocyanate wie Thiocyanatomethylthiobenzothiazol (TCMTB), Methylenbisthiocyanat (MBT);

quartäre Ammoniumverbindungen wie Benzyldimethyltetradecylammoniumchlorid, Benzyl-dimethyl-dodecylammoniumchlorid, Didecyl-dimethyl-ammoniumchlorid;

Morpholinderivate wie $C_{11}$-$C_{14}$-4-Alkyl-2,6-dimethylmorpholin-homologe(Tridemorph),($\pm$)-cis-4-[3-tert-Butylphenyl)-2-methylpropyl]-2,6-dimethylmorpholin (Fenpropimorph), Falimorph;

Phenole wie o-Phenylphenol, Tribromphenol, Tetrachlorphenol, Pentachlorphenol, 3-Methyl-4-chlorphenol, Dichlorophen, Chlorophen oder deren Salze;

Iodderivate wie Diiodmethyl-p-arylsulfone z.B. Diiodmethyl-p-tolylsulfon;

Bromderivate wie Bronopol;

Isothiazolinone wie N-Methylisothiazolin-3-on, 5-Chloro-N-methylisothiazolin-3-on, 4,5-Dichloro-N-octylisothiazolin-3-on, N-Octylisothiazolin-3-on (Octhilinone);

Benzisothiazolinone, Cyclopentenisothiazolinone;

Pyridine wie 1-Hydroxy-2-pyridinthion (und ihre Na-,Fe-, Ma, Zn-Salze), Tetrachlor-4-methylsulphonylpyridin;

Metallseifen wie Zinn-, Kupfer-, Zink-naphthenat, -octoat, -2-ethylhexanoat, -oleat, -phosphat, -benzoat, Oxide wie TBTO, $Cu_2O$, CuO, ZnO;

Organische Zinnverbindungen wie Tributylzinnnaphthenat und Tributylzinnoxid;

Dialkyldithiocarbamate wie Na- und Zn-Salze von Dialkyldithiocarbamaten, Tetramethyldiuramdisulfid (TMTD);

Nitrile wie 2,4,5,6-Tetrachlorisophthalonitril (Chlorthalonil) u.a. Mikrobizide mit aktivierten Halogengruppen wie Cl-Ac, MCA, Tectamer, Bronopol, Bromidox;

Benzthiazole wie 2-Mercaptobenzothiazol; s.o. Dazomet;

Chinoline wie 8-Hydroxychinolin;

Formaldehydabspaltende Verbindungen wie Benzylalkoholmono(poly)hemiformal, Oxazolidine, Hexahydro-s-triazine, N-Methylolchloracetamid;

Tris-N-(Cyclohexyldiazeniumdioxy)-Aluminium N-(Cyclohexyldiazeniumdioxy)-Tributylzinn bzw. K-Salze, Bis-(N-cyclohexyl)diazinium (-dioxy- Kupfer oder Aluminium);

Als Insektizide werden bevorzugt zugesetzt:

Phosphorsäureester wie Azinphos-ethyl, Azinphos-methyl, 1-(4-Chlorphenyl)-4-(O-ethyl, S-propyl)phosphoryloxypyrazol (TIA-230), Chlorpyrifos, Coumaphos, Demeton, Demeton-S-methyl, Diazinon, Dichlorvos, Dimethoate, Ethoprophos, Etrimfos, Fenitrothion, Fenthion, Heptenophos, Parathion, Parathion-methyl, Phosalone, Phoxim, Pirimiphosethyl, Pirimiphos-methyl, Profenofos, Prothiofos, Sulfprofos, Triazophos und Trichlorphon;

Carbamate wie Aldicarb, Bendiocarb, BPMC (2-(1-Methylpropyl)phenylmethylcarbamat), Butocarboxim, Butoxicarboxim, Carbaryl, Carbofuran, Carbosulfan, Cloethocarb, Isoprocarb, Methomyl, Oxamyl, Pirimicarb, Promecarb, Propoxur und Thiodicarb;

Pyrethroide wie Allethrin, Alphamethrin, Bioresmethrin, Byfenthrin (FMC 54 800), Cycloprothrin, Cyfluthrin, Decamethrin, Cyhalothrin, Cypermethrin, Deltamethrin, Alpha-cyano-3-phenyl-2-methylbenzyl-2,2-dimethyl-3-(2-chlor-2-trifluormethylvinyl)cyclopropancarboxylat, Fenpropathrin, Fenfluthrin, Fenvalerate, Flucythrinate, Flumethrin, Fluvalinate, Permethrin und Resmethrin;

Nitroimino und Nitromethylene wie 1-[(6-Chlor-3-pyridinyl)-methyl]-4,5-dihydro-N-nitro-1H-imidazol-2-amin (Imidacloprid)

Als andere Wirkstoffe kommen auch in Betracht Algizide, Molluskizide, Wirkstoffe gegen "sea animals", die sich auf z.B. Schiffsbodenanstrichen ansiedeln.

Neue Mittel oder Konzentrate enthalten die erfindungsgemäßen Wirkstoffgemische in einer Konzentration von 0,01 bis 30 Gew.-%, daneben gegebenenfalls 0,001 bis 10 Gew.-% eines geeigneten weiteren Fungizids, Insektizids oder eines weiteren Wirkstoffs wie oben genannt sowie mehr als 30 Gew.-% eines Gemisches aus Lösungs/Verdünnungsmittels und/oder Binde- oder Fixiermittel, gegebenenfalls Sikkative und UV-Stabilisatoren und gegebenenfalls Farbstoffe und Pigmente sowie weitere Verarbeitungshilfsmittel.

Die auf diese Weise hergestellten erfindungsgemäßen Mittel, Konzentrate und Formulierungen zum Konservieren von Holz und Holzwerkstoffen zeigen Wirksamkeit nicht nur gegen die vorbenannten Pilze sondern auch gegen holzzerstörende Insekten, falls ein Insektizid zugegen ist. Beispielhaft - ohne zu limitieren- seien als holzzerstörende Insekten genannt:

A:   Hautflügler:
     Sirex juvencus
     Urocerus augur
     Urocerus gigas
     Urucerus gigas taignus
B:   Käfer:
     Anobium punctatum
     Apate monachus
     Bostrychus capucins
     Chlorophores pilosus
     Dendrobium pertinex
     Dinoderus minutus
     Ernobius mollis
     Heterobostrychus brunneus
     Hylotrupes bajulus
     Lyctus africanus
     Lyctus brunneus
     Lyctus linearis
     Lyctus planicollis
     Lyctus pubescens
     Minthea rugicollis
     Priobium carpini
     Ptilinus pecticornis
     Sinoxylon spec.
     Trogoxylon aequale
     Trypto dendron spec.
     Xestobium rufovillosum
     Xyleborus spec.
C:   Termiten:
     Coptotermes formosanus
     Cryptotermes brevis
     Heterotermes indicola
     Kalotermes flavicollis
     Mastotermes darwiniensis
     Reticulitermes flavipes
     Reticulitermes lucifugus
     Reticulitermes santonensis
     Zootermopsis nevadensis

Die erfindungsgemäßen Wirkstoffkombinationen ermöglichen in vorteilhafter Weise, die bisher verfügbaren mirkobiziden Mittel durch effektivere zu ersetzen. Sie zeigen eine gute Stabilität und haben vorteilhafter Weise ein breites Wirkungsspektrum.

Beispiel

1. Synergistisches Fungizidgemisch aus Tebuconazol (A) und IPBC (B)

30 Gew.-Teile Tebuconazol und 70 Gew.-Teile IPBC werden als Feststoffe innig vermischt oder in einer geeigneten Mühle zusammen vermahlen. Es resultiert das synergistische Fungizidgemisch als weißes Pulver.

Analog können Gemische der übrigen Mischungsverhältnisse der Komponenten hergestellt werden.

2. Synergistische Wirksamkeit der erfindungsgemäßen Wirkstoffe gegen Holzpilze.

Die synergistische Wirksamkeit der erfindungsgemäßen Wirkstoffmischungen kann durch den Vergleich der MHK (minimale Hemmkonzentration)-Werte der reinen Wirkstoffe mit denen der Gemische ermittelt werden.

Bestimmung der MHK-Werte:

Zum Nachweis der Wirksamkeit gegen Pilze wurden die minimalen Hemm-Konzentrationen (MHK) erfindungsgemäßer Mischungen bestimmt:

Ein Agar, der aus Bierwürze und Pepton hergestellt wird, wird mit erfindungsgemäßen Wirkstoffen in Konzentrationen von 0,1 mg/l bis 5.000 ml/l versetzt. Nach Erstarren des Agars erfolgt Kontamination mit Reinkulturen der in der Tabelle aufgeführten Testorganismen. Nach 2-wöchiger Lagerung bei 28°C und 60 bis 70 % rel. Luftfeuchtigkeit wird die MHK bestimmt. MHK ist die niedrigste Konzentration an Wirkstoff, bei der keinerlei Bewuchs durch die verwendete Mikrobenart erfolgt; sie ist in der nachstehenden Tabelle 1 angegeben.

Nach der von Kull et al (F.C. Kull, P.C. Eismann, H.D. Sylvestrowicz, R.L. Mayer, Applied Microbiol. 9, 538 bis 541, 1961) beschriebenen Methode wird dann der Synergismus ermittelt. Dabei gelten folgende Bezeichnungen:

$$\frac{Q_A}{Q_a} + \frac{Q_B}{Q_b} = X$$

$X =$ 1 bedeutet Additivität

$X >$ 1 bedeutet Antagonimus

$X <$ 1 bedeutet Synergismus

$Q_a =$ Konzentration von Substanz A, die die MHK darstellt

$Q_b =$ Konzentration von Substanz B, die die MHK darstellt

$Q_A =$ Menge von Substanz A in der Konzentration von A/B, die das Mikrobenwachstum unterbindet

$Q_B =$ Menge von Substanz B in der Konzentration von A/B, die das Mikrobenwachstum unterbindet.

Das Ergebnis ist in der folgenden Tabelle 2 festgehalten.

Tabelle 1

| MHK-Werte | | | | |
|---|---|---|---|---|
| Wirkstoff | Sclerophoma pityophila | Aureobasidium pullulans | Alternaria tenius | Cladosporium herbarum |
| Tebuconazol | 1,5 | 35 | 200 | 50 |
| Tebu/IPBC = 9:1 | 1 | 35 | 50 | 50 |
| Tebu/IPBC = 8:2 | 1,5 | 20 | 20 | 20 |
| Tebu/IPBC = 7:3 | 1 | 7,5 | 15 | 12,5 |
| Tebu/IPBC = 6:4 | 1 | 5 | 10 | 10 |
| Tebu/IPBC = 5:5 | 0,75 | 5 | 7,5 | 10 |
| Tebu/IPBC = 4:6 | 0,75 | 7,5 | 12,5 | 5 |
| Tebu/IPBC = 3:7 | 0,5 | 2 | 3,5 | 2 |
| Tebu/IPBC = 2:8 | 0,75 | 7,5 | 5 | 5 |
| Tebu/IPBC = 1:9 | 0,75 | 7,5 | 7,5 | 5 |
| IPBC | 1 | 7,5 | 5 | 5 |

Tabelle 2

| Tebuconazole/ IPBC | Sclerophoma pityophila | Aureob. pull. | Altern. tenius | Clad. herbarum |
|---|---|---|---|---|
| 9:1 | 0,70 | > 1 | > 1 | > 1 |
| 8:2 | 1,1 | 1 | 0,88 | $\geqq$ 1 |
| 7:3 | 0,77 | 0,12 | 0,93 | 0,95 |
| 6:4 | 0,80 | 0,36 | 0,83 | 0,92 |
| 5:5 | 0,63 | 0,40 | 0,77 | 1,1 |
| 4:6 | 0,65 | 0,69 | > 1 | 0,64 |
| 3:7 | 0,45 | 0,72 | 0,49 | 0,29 |
| 2:8 | 0,70 | 0,84 | 0,80 | 1 |
| 1:9 | 0,73 | 0,92 | > 1 | ~ 1 |

**Patentansprüche**

1. Synergistisch wirkende Mikrobizide Mittel, gekennzeichnet durch einen Gehalt an einer Wirkstoffkombination bestehend aus mindestens einem Azolfungizid und einem Iodpropargyl-Derivat der Formel (I)

$$IC \equiv C\text{-}CH_2\text{-}O\text{-}CO\text{-}NH\text{-}R \qquad (I)$$

in welcher

R für geradkettiges oder verzweigtes Alkyl mit 1 bis 6 Kohlenstoffatomen, für Cycloalkyl mit 3 bis 6 Kohlenstoffatomen oder für Aryl steht.

2. Mikrobizide Mittel nach Anspruch 1, gekennzeichnet durch einen Gehalt an einer Wirkstoffkombination bestehend aus Tebuconazol und IPBC.

3. Verfahren zur Bekämpfung von Mikroben, dadurch gekennzeichnet, daß man eine Wirkstoffkombination gemäß Anspruch 1 auf Mikroben oder deren Lebensraum einwirken läßt.

4. Verwendung von mikrobiziden Mitteln nach Anspruch 1 zum Schutz von Holz und Holzwerkstoffen gegen mikrobiellen Abbau.

5. Verfahren zur Herstellung von synergistisch wirkenden mikrobiziden Mitteln, dadurch gekennzeichnet, daß man eine Wirkstoffkombination gemäß Anspruch 1 mit Streckmitteln und/oder grenzflächenaktiven Mitteln vermischt.

6. Verfahren nach Anspruch 5, dadurch gekennzeichnet, daß man zusätzlich ein weiteres Fungizid, Insektizid oder eine andere aktive Komponente zusetzt.

**Claims**

1. Synergistically acting microbicidal agents, characterised in that they contain an active compound combination consisting of at least one azole fungicide and an iodopropargyl derivative of the formula (I)

$$IC \equiv C\text{-}CH_2\text{-}O\text{-}CO\text{-}NH\text{-}R \qquad (I)$$

in which

8

R        represents straight-chain or branched alkyl having 1 to 6 carbon atoms, or represents cycloalkyl having 3 to 6 carbon atoms or represents aryl.

2.  Microbicidal agents according to Claim 1, characterised in that they contain an active compound combination consisting of tebuconazole and IPBC.

3.  Method of combating microbes, characterised in that an active compound combination according to Claim 1 is allowed to act on microbes or their environment.

4.  Use of microbicidal agents according to Claim 1 for preserving wood and timber products against microbial degradation.

5.  Process for the preparation of synergistically acting microbicidal agents, characterised in that an active compound combination according to Claim 1 is mixed with extenders and/or surface-active agents.

6.  Process according to Claim 5, characterised in that a further fungicide, insecticide or another active component is additionally added.

**Revendications**

1.  Produits microbicides à activité synergétique, caractérisés en ce qu'ils contiennent une combinaison de substances actives consistant en au moins un fongicide azolique et un dérivé iodopropargylique de formule (I)

$$IC{\equiv}C\text{-}CH_2\text{-}O\text{-}CO\text{-}NH\text{-}R \hspace{4cm} (I)$$

dans laquelle

R        représente un groupe alkyle à chaîne droite ou ramifiée en $C_1$-$C_6$, cycloalkyle en $C_3$-$C_6$ ou aryle.

2.  Produits microbicides selon la revendication 1, caractérisés en ce qu'ils contiennent une combinaison de substances actives consistant en Tebuconazol et IPBC.

3.  Procédé pour lutter contre les microbes, caractérisé en ce que l'on fait agir sur les microbes ou leur habitat une combinaison de substances actives selon la revendication 1.

4.  Utilisation des produits microbicides selon la revendication 1 pour la protection du bois et des matériaux en bois contre une dégradation microbienne.

5.  Procédé pour la préparation de produits microbicides à activité synergétique, caractérisé en ce que l'on mélange une combinaison de substances actives selon la revendication 1 avec des diluants et/ou des agents tensioactifs.

6.  Procédé selon la revendication 5, caractérisé en ce que l'on ajoute un autre fongicide, un insecticide ou un autre composant actif.